# EUROPEAN PATENT SPECIFICATION

(11) **EP 3 223 127 B1**
(45) Date of publication and mention of the grant of the patent: **19.02.2020**
(21) Application number: 15860508.9
(22) Date of filing: 19.11.2015
(51) Int. Cl.: H04M 1/725, G06F 3/048, G06F 3/0488

(54) **APPARATUS FOR EXECUTING SPLIT SCREEN DISPLAY AND OPERATING METHOD THEREFOR**
VORRICHTUNG ZUR AUSFÜHRUNG EINER GETEILTEN BILDSCHIRMANZEIGE UND BETRIEBSVERFAHREN DAFÜR
APPAREIL POUR L'EXÉCUTION D'UN AFFICHAGE À ÉCRAN DIVISÉ ET SON PROCÉDÉ D'EXPLOITATION

(30) Priority: 19.11.2014 CN 201410665406
(43) Date of publication of application: 27.09.2017
(73) Proprietor: Samsung Electronics Co., Ltd., Gyeonggi-do 16677 (KR)
(72) Inventor: ZHANG, Xun, Guangzhou Guangdong 51000 (CN)
(74) Representative: HGF Limited
(86) International application number: PCT/KR2015/012490
(87) International publication number: WO 2016/080790

(56) References cited:
- CN-A- 103 279 303
- KR-A- 20110 084 624
- KR-A- 20130 054 074
- KR-A- 20130 126 428
- KR-B1- 101 379 893
- US-A1- 2013 263 042
- US-A1- 2014 304 715
- US-A1- 2014 313 143
- US-A1- 2014 325 436

## Description

### TECHNICAL FIELD

The present disclosure relates to a method of performing a split-screen display in a terminal, and more particularly to, an apparatus and a method for performing a split-screen display.

### BACKGROUND ART

Recently, as a touch terminal with a large screen that is able to support a plurality of applications has been developed, demand for technology capable of harmoniously displaying and managing the plurality of applications on a single screen has increased.

However, existing technology of displaying and managing the plurality of applications on the single screen has many limitations. For example, the existing technology generally senses an interrupt that occurs when event notification information is received and splits a screen into a plurality of sub displays according to the sensed interrupt. Such an automatic split screen method is not able to determine whether a user intended to split the screen or not. Also, a manual operation by the user is necessary even based on a user's intention.

In summary, an existing split-screen display performing solution is not able to determine whether a user intended to split a screen and has a limitation in that the user has to perform manual operations.

US 2014 325436 A1 relates to a mobile communication terminal for displaying an event-handling view.

CN 103 279 303A relates to a method and apparatus for processing an event message.

### DETAILED DESCRIPTION OF THE INVENTION

### TECHNICAL PROBLEM

The embodiments provide an apparatus and method for performing a split-screen display.

### TECHNICAL SOLUTION

The invention is defined in the independent claims. Additional embodiments are defined in the dependent claims. An embodiment of the present disclosure provides a method, performed by a split-screen display apparatus, of performing a split-screen display in a terminal, the method including: when an event notification message is received while an application is being executed, receiving a view instruction for viewing the received event notification message; splitting a screen of the terminal into an original application area and a new application area based on the received view instruction; and displaying an interface of the application that is being executed in the terminal on the original application area and displaying an interface of an application related to the received event notification message on the new application area.

### DESCRIPTION OF THE DRAWINGS

FIG. 1 is a block diagram of an apparatus for performing a split-screen display, according to an embodiment of the disclosure.
FIG. 2 is a flowchart of a method in which a terminal performs a split-screen display, according to an embodiment of the present disclosure.
FIG. 3 is a flowchart of an operation of receiving a view instruction for viewing an event notification message, according to an embodiment of the present disclosure.
FIG. 4 is a flowchart of an operation of receiving a view instruction for viewing an event notification message, according to another embodiment of the present disclosure.
FIG. 5 is a flowchart of an operation of receiving a view instruction for viewing an event notification message, according to another embodiment of the present disclosure.
FIGS. 6A, 6B, and 6C illustrate examples of determining a split size of a screen by receiving a view instruction for viewing an event notification message, according to an embodiment of the present disclosure.
FIG. 7 illustrates an example of determining a split size of a new application area according to a content size of a received event notification message, according to an embodiment of the present disclosure.
FIGS. 8A and 8B illustrate examples of determining a split location of a new application area based on a way in which a user is currently holding a terminal, according to an embodiment of the present disclosure.
FIGS. 9A and 9B illustrate examples of determining a split location and a split size of a new application area based on a trace of a predetermined touch manipulation, according to an embodiment of the present disclosure.
FIG. 10 is a flowchart of a method in which a terminal performs a split-screen display, according to another embodiment of the present disclosure.
FIGS. 11A, 11B, and 11C illustrate examples in which a terminal performs a split-screen display, according to an embodiment of the present disclosure.
FIGS. 12A, 12B, and 12C illustrate examples in which a terminal performs a split-screen display, according to another embodiment of the present disclosure.
FIGS. 13A, 13B, and 13C illustrate examples in which a terminal performs a split-screen display, according to another embodiment of the present disclosure.
FIG. 14 is a flowchart of a method in which a terminal performs a split-screen display, according to another embodiment of the present disclosure.
FIGS. 15A and 15B illustrate examples in which a terminal performs a split-screen display, according to another embodiment of the present disclosure.
FIGS. 16A, 16B, and 16C illustrate examples of a method in which a terminal performs a split-screen display, according to an embodiment of the present disclosure.
FIGS. 17A, 17B, and 17C illustrate examples of a method in which a terminal performs a split-screen display, according to another embodiment of the present disclosure.
FIGS. 18A, 18B, and 18C illustrate examples of a method in which a terminal performs a split-screen display, according to another embodiment of the present disclosure.
FIGS. 19A and 19B illustrate examples of a method in which a terminal performs a split-screen display, according to another embodiment of the present disclosure.
FIGS. 20A and 20B illustrate examples of a method in which a terminal performs a split-screen display, according to another embodiment of the present disclosure.

### DETAILED DESCRIPTION

According to an aspect of an embodiment of the disclosure, a method, performed by a split-screen display apparatus, of performing a split-screen display in a terminal includes: when an event notification message is received while an application is being executed, receiving a view instruction for viewing the received event notification message; splitting a screen of the terminal into an original application area and a new application area based on the received view instruction; and displaying an interface of the application that is being executed in the terminal on the original application area and displaying an interface of an application related to the received event notification message on the new application area.

The view instruction may be received when the event notification message is displayed on a notification bar or within a predetermined time range after the event notification message is received.

The splitting may be performed when the terminal is in a state suitable for performing screen splitting, wherein, when the terminal is not in the state suitable for performing screen splitting, the interface of the application related to the received event notification message is displayed on the screen of the terminal.

The state suitable for performing screen splitting may be a state in which the terminal is in a whole screen display state, and the state not suitable for performing screen splitting may be a state in which the terminal is a split-screen display state.

The splitting may include: determining a split size of the new application area according to a size of the received event notification message or a size of a display widget of the application related to the received event notification message.

The splitting may include: sensing a location of the terminal being held by a user and determining a split location of the new application area based on the sensed location.

The view instruction may include a predetermined touch operation on the screen of the terminal, wherein the splitting includes: determining a split location and a split size of the new application area of a trace of the predetermined touch operation.

The method may further include: receiving a recovery instruction to cancel the split-screen display; and canceling the original application area and the new application area according to the recovery instruction.

According to another aspect of an embodiment of the disclosure, an apparatus for performing a split-screen display in a terminal includes: when an event notification message is received while an application is being executed, an input section configured to receive a view instruction for viewing the received event notification message; and a processor configured to split a screen of the terminal into an original application area and a new application area based on the received view instruction and display an interface of the application that is being executed in the terminal on the original application area and displaying an interface of an application related to the received event notification message on the new application area.

The view instruction may be received when the event notification message is displayed on a notification bar or within a predetermined time range after the event notification message is received.

The processor may perform splitting when the terminal is in a state suitable for performing screen splitting, and, when the terminal is not in the state suitable for performing screen splitting, display the interface of the application related to the received event notification message on the screen of the terminal.

The state suitable for performing screen splitting may be a state in which the terminal is in a whole screen display state, and the state not suitable for performing screen splitting may be a state in which the terminal is a split-screen display state.

The processor may determine a split size of the new application area according to a size of the received event notification message or a size of a display widget of the application related to the received event notification message.

The processor may sense a location of the terminal being held by a user and determine a split location of the new application area based on the sensed location.

The view instruction may include a predetermined touch operation on the screen of the terminal, wherein the processor determines a split location and a split size of the new application area according to a trace of the predetermined touch operation.

The processor may receive a recovery instruction to cancel the split-screen display; and cancel the original application area and the new application area according to the recovery instruction.

According to another aspect of an embodiment of the disclosure, there is provided a non-transitory computer-readable recording medium having recorded thereon a computer program for executing the method, performed by a split-screen display apparatus, of performing a split-screen display in a terminal including: when an event notification message is received while an application is being executed, receiving a view instruction for viewing the received event notification message; splitting a screen of the terminal into an original application area and a new application area based on the received view instruction; and displaying an interface of the application that is being executed in the terminal on the original application area and displaying an interface of an application related to the received event notification message on the new application area.

Hereinafter, the present disclosure will be described in detail with reference to the accompanying drawings. The present disclosure may have various embodiments, and modifications and changes may be made therein without departing from the scope and spirit of the present disclosure. Therefore, it should be understood that there is no intent to limit the present disclosure to the particular forms, and the present disclosure should be construed to cover all modifications, equivalents, and/or alternatives falling within the spirit and scope of the present disclosure. In describing the drawings, the same or similar elements are designated by similar reference numerals.

The terms used in the present invention are selected from among common terms that are currently widely used in consideration of their function in the present invention. However, the terms may be different according to an intention of one of ordinary skill in the art, a precedent, or the advent of new technology. Also, in particular cases, the terms are discretionally selected by the applicant of the present invention, and the meaning of those terms will be described in detail in the corresponding part of the detailed description. Therefore, the terms used in the present invention are not merely designations of the terms, but the terms are defined based on the meaning of the terms and content throughout the present invention.

The term "unit" in the embodiments of the present invention means a software component or hardware components such as a field-programmable gate array (FPGA) or an application-specific integrated circuit (ASIC), and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with the smaller number of components and "units", or may be divided into additional components and "units".

In the present specification, a mobile device means a relatively small sized computer device that a user is able to carry, for example, a cellular phone, a personal digital assistant (PDA), a laptop computer, etc.

As used herein, the expressions "have", "may have", "include", and "may include" refer to the existence of a corresponding feature (e.g., numeral, function, operation, or constituent element such as component), and do not exclude one or more additional features.

In the present disclosure, the expressions "A or B", "at least one of A or/and B", and "one or more of A or/and B" may include all possible combinations of the items listed. For example, the expressions "A or B", "at least one of A and B", and "at least one of A or B" refer to all of (1) including at least one A, (2) including at least one B, and (3) including all of at least one A and at least one B.

The expressions "a first", "a second", "the first", and "the second" used in embodiments of the present disclosure may modify various components regardless of the order and/or the importance but does not limit the corresponding components. For example, a first user device and a second user device indicate different user devices, although both of the devices are user devices. For example, a first element may be referred to as a second element, and similarly, a second element may be referred to as a first element without departing from the scope of the present disclosure.

When an element (e.g., a first element) is referred to as being (operatively or communicatively) "connected," or "coupled," to another element (e.g., a second element), this element may be directly connected or coupled directly to the other element or any other element (e.g., third element) may be interposed between them. By contrast, when an element (e.g., a first element) is referred to as being "directly connected," or "directly coupled" to another element (e.g., a second element), there are no element (e.g., a third element) interposed between them.

The expression "configured to", as used herein, may be used interchangeably with, for example, "suitable for", "having the capacity to", "designed to", "adapted to", "made to", or "capable of" according to the situation. The term "configured to" may not necessarily imply "specifically designed to" with respect to hardware. Alternatively, in some situations, the expression "device configured to" may mean that the device, together with other devices or components, "is able to". For example, the phrase "processor adapted (or configured) to perform A, B, and C" may refer to a dedicated processor (e.g., an embedded processor) used only to perform the corresponding operations or a generic-purpose processor (e.g., a central processor (CPU) or an application processor (AP)) that can perform the corresponding operations by executing one or more software programs stored in a memory device.

In the present specification, the term "terminal" refers to a device that is connected to a centrally located computer to input data or output a processing result. The terminal may be an electronic terminal with a touch screen, for example, a smart phone, a tablet computer, a personal computer (PC), a game console, a multimedia player, etc.

A terminal according to embodiments of the present disclosure may include at least one of, for example, a smart phone, a tablet PC, a mobile phone, a video phone, an electronic book reader (e-book reader), a desktop PC, a laptop PC, a netbook computer, a workstation, a server, a PDA, a portable multimedia player (PMP), a MPEG-1 audio layer-3 (MP3) player, a mobile medical device, a camera, and a wearable device. According to various embodiments, the wearable device may include at least one type of accessory (e.g., a watch, a ring, a bracelet, an anklet, a necklace, glasses, a contact lens, or a head-mounted device (HMD)), a fabric or clothing integrated type (e.g., an electronic clothing), a body-mounted accessory (e.g., a skin pad, or tattoo), and a bio-implantable accessory (e.g., an implantable circuit).

The terms used herein are merely used for the purpose of describing particular embodiments and do not limit the scope of other embodiments of the present disclosure. As used herein, singular forms of terms may include plural forms as well, unless the context clearly indicates otherwise. Unless defined otherwise, all terms used herein, including technical and scientific terms, have the same definitions as those commonly understood by a person of ordinary skill in the art to which the present disclosure pertains. Such terms as those defined in a generally used dictionary may be interpreted to have the same definitions as the contextual definitions in the relevant field of art, and are not to be interpreted to have ideal or excessively formal definitions, unless clearly defined in the present disclosure. In some cases, even terms defined in the present disclosure should not be interpreted in a manner that excludes embodiments of the present disclosure.

Hereinafter, a split-screen apparatus according to various embodiments will be described with reference to the accompanying drawings. In the present disclosure, the term "user" may indicate a person using an apparatus or an apparatus (e.g., an artificial intelligence electronic apparatus) using the apparatus.

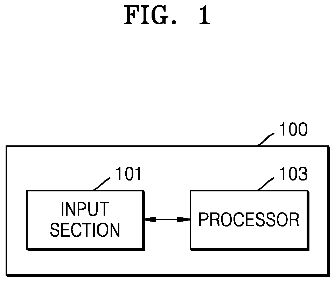

FIG. 1 is a block diagram of an apparatus 100 for performing a split-screen display, according to an embodiment of the disclosure.

As shown in FIG. 1, the apparatus 100 for performing the split-screen display in a terminal may include an input section 101 and a processor 103. Such components may be implemented by a general hardware processor such as a sensor for performing a specific function, a digital signal processor, FPGAs, etc. or a dedicated hardware processor such as dedicated chips, or may be implemented by a computer program in a software manner, such as being installed as modules of an application installed in the terminal for performing the split-screen display.

While the terminal is executing an application, if an event notification message is received, the input section 101 may be used to receive a view instruction for viewing the received event notification message. The view instruction may be received from a user or an external device or may be received only when a predetermined condition is satisfied.

In this regard, the event notification message may be an event notification message generated by the terminal itself, for example, a time alarm reminder message, an important event reminder message, etc. The event notification message may be an event notification message received by the terminal through an external network (a 3G network, a 5G network, a WiFi network, etc.) such as a content push notification of the application, a message receiving notification, an incoming call notification, etc.

If the event notification message is received while the terminal is executing the application, the input section 101 may allow the view instruction to be received only when the predetermined condition is satisfied. In this regard, the satisfying of the predetermined condition may mean that the user wants to perform a screen splitting operation. In this way, the input section 101 may receive an instruction from the user only when the user wishes to perform a split-screen operation and may not receive the instruction from the user if the user does not wish to perform the split-screen operation so that an arbitrary screen touch operation of the user may not be misunderstood as a screen splitting instruction, thereby reducing a possibility of inadvertent screen splitting.

The processor 103 may split a current screen into an original application area and a new application area according to the view instruction received from the user. In this regard, the original application area may indicate a region for displaying an interface of an application that is currently being executed, and the new application area may indicate a region for displaying an interface of an application related to the received event notification message.

Interfaces of all applications that are currently being executed may be displayed on the original application area. For example, when a plurality of applications are being executed in a foreground, the original application area may display respective interfaces of the plurality of applications. That is, the original application area itself may be a target of the split-screen display.

The processor 103 may determine whether the terminal is in a state suitable for performing screen splitting. Specifically, when the terminal is in the state suitable for performing screen splitting, the processor 103 may split the current screen of the terminal into the original application area and the new application area according to the view instruction received from the user. Also, when the terminal is not in the state suitable for performing screen splitting, the processor 103 may not perform screen splitting. For example, a case where the terminal is in the state suitable for performing screen splitting may be a case where the terminal is currently in a whole screen display state. In this case, the processor 103 may perform screen splitting when receiving the view instruction. A case where the terminal is not in the state suitable for performing screen splitting may be a case where the terminal is currently performing the split-screen display. In this case, the processor 103 may not perform screen splitting even when receiving the view instruction.

The processor 103 may split the current screen of the terminal into the original application area and the new application area according to a designated size. For example, the processor 103 may split the current screen of the terminal into the same size of two parts or into the original application area and the new application area according to a different designated proportion.

The processor 103 may split the current screen of the terminal into the original application area and the new application area according to a characteristic of the received notification message. Specifically, the processor 103 may split the current screen into the original application area and the new application area using the size of the content in the event notification message. For example, when event notification messages are present with respect to numerous pieces of content or when the size of the content in the event notification message is obviously greater than the size of the content displayed on the interface of the application that is currently being executed, the processor 103 may split the current screen in such a way that the new application area is greater than the original application area.

As another example, the processor 103 may split the current screen into the new application area and the original application area according to a size of a display widget of the application related to the received notification message. In this regard, the display widget may mean a graphical user interface (GUI) factor used to play all pieces of data processed by a relevant application. If the display widget of the application related to the received notification message is great (or the display widget of the application related to the received notification message is obviously greater than a display widget of the application that is currently executing), the processor 103 may split the current screen in such a way that the new application area is greater than the original application area.

Through the method mentioned above, the processor 103 may determine a size proportion of the original application area and the new application area based on the characteristic of the received event notification message, and thus the user may conveniently check the received event notification message.

Also, for example, the processor 103 may determine a split location of the new application area according to a way in which the user is holding the terminal. Specifically, the terminal may determine the way the user is currently holding the terminal (for example, a location of the terminal held by the user) by using various types of sensors provided by the terminal. For example, the terminal may sense a deflection value thereof or a rotation angular velocity value through a gyrocompass or sense a capacitance value of the screen thereof through a capacitance sensor to determine the way in which the user is currently holding the terminal according to the sensed value. In this case, the processor 103 may split the current screen such that the new application area is at a location that the user may conveniently manipulate. In this way, the apparatus 100 for performing the split-screen display may make it convenient to manipulate the application related to the received event notification message in the new application area, thereby enhancing user convenience.

Also, as another example, when the view instruction received from the user includes a predetermined touch manipulation with respect to the current screen of the terminal, the processor 103 may determine the split location and a split size of the new application area according to a trace of a predetermined touch manipulation. That is, the predetermined touch manipulation included in the view instruction may be a reference of a screen splitting manipulation performed by the processor 103. Specifically, the predetermined touch manipulation may include a slide manipulation (for example, sliding a stylus or a finger on the current screen) performed by the user on the touch screen. The apparatus 100 for performing the split-screen display may split the current screen of the terminal into the original application area and the new application area based on a generated sliding trace. For example, if the sliding trace is a boundary of the current screen, the processor 103 may determine both areas of the boundary as the original application area and the new application area. In this way, a location and a size of each area of the split-screen display may be determined in accordance with a user's desire, thereby enhancing flexibility of the display.

Furthermore, the split-screen display may be canceled according to a user's instruction. Specifically, when the user wants to stop the split-screen display, the input section 101 may receive a recovery instruction so as to cancel the split-screen display, and the processor 103 may cancel the original application area and the new application area according to the recovery instruction received from the user. For example, the recovery instruction may refer to a screen splitting operation for canceling the split-screen display. An operation in which the user clicks a location inside the new application area to slide therefrom to outside may mean canceling the new application area. An operation in which the user clicks a location inside the original application area to slide therefrom to outside may mean canceling the original application area. Furthermore, the recovery instruction may be a voice instruction for canceling the split-screen display.

The processor 103 may display an application interface of the terminal that is currently being executed on the original application area and may display the application interface related to the received event notification message on the new application area. Specifically, the processor 103 may obtain the interface of the application that is currently being executed and the interface of the application related to the received event notification message and may display the obtained interfaces of the applications on the original application area and the new application area according to corresponding settings.

Also, since the terminal is not in the state suitable for performing screen splitting, if the processor 103 does not perform screen splitting, the processor 103 may display the interface of the application related to the received event notification message on the current screen.

For example, if the terminal is currently in the state of the split-screen display, the processor 103 may determine again whether the terminal is not in the state suitable for performing screen splitting and may replace and display the interface of the application related to the received event notification message with an interface of at least one of applications that are currently being executed by the terminal according to the received view instruction. In this case, the processor 103 may select an application that is to be replaced by the interface of the application related to the received event notification message among the applications that are currently executing according to characters (for example, a content size, a size of the display widget, etc.) of the application related to the received event notification message.

For example, after executing an overlying display, i.e. replacing and displaying the interface of the application related to the received event notification message with the interface of the at least one of applications that are currently being executed by the terminal, the processor 103 may switch the interface of the application related to the received event notification message with the interface of the at least one of applications that are currently being executed by the terminal according to a user switch manipulation. For example, an override label corresponding to each displayed application may be set. If the label is clicked, an interface of an application corresponding to the clicked label may be displayed on an uppermost layer, and other applications may not be viewed. Respective applications that are to be replaced may be switched according to a specific slide operation (for example, a slide operating similar to turning pages) so that respective applications may be sequentially displayed on the uppermost layer according to a user slide operation.

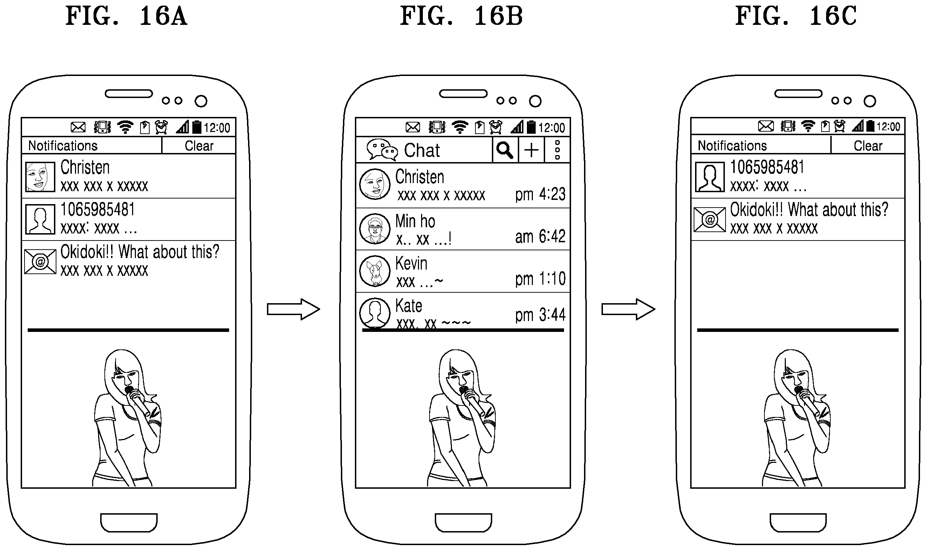

This will be described in detail with reference to FIGS. 16 through 20.

As described above, according to an embodiment of the present disclosure, the apparatus 100 for performing the split-screen display in the terminal may execute the split-screen display at an appropriate time according to a user selection, and thus accuracy of screen splitting may be secured through a simple manipulation.

Although the input section 101 and the processor 103 are expressed as separate components in the present embodiment, the input section 101 and the processor 103 may be combined and implemented as the same component.

Also, although the input section 101 and the processor 103 are expressed as components adjacent to each other inside the apparatus 100 for performing the split-screen display in the present embodiment, since apparatuses for performing respective functions of the input section 101 and the processor 103 are not necessarily adjacent to each other physically, the input section 101 and the processor 103 may be distributed according to embodiments.

Also, since the apparatus 100 for performing the split-screen display is not limited to a physical apparatus, some of functions of the apparatus 100 for performing the split-screen display may be implemented not in hardware but in software.

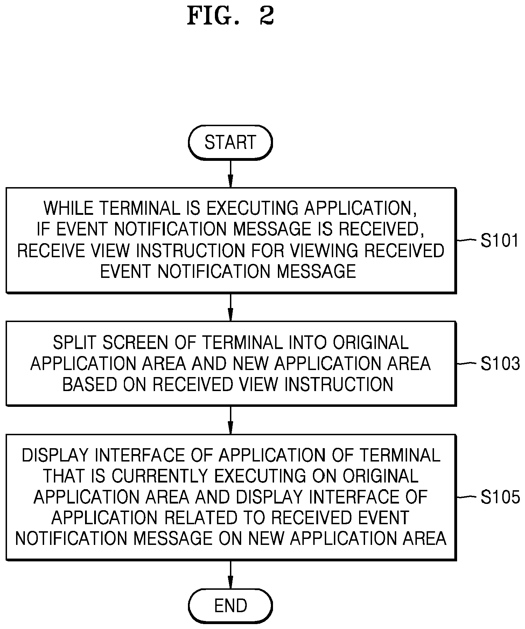

FIG. 2 is a flowchart of a method in which a terminal performs a split-screen display, according to an embodiment of the present disclosure.

The method may be performed by the apparatus 100 of FIG. 1 and may also be performed in the form of software like a method performed by an application for executing the split-screen display installed in the terminal.

In operation S101, while the terminal is executing an application, if an event notification message is received, the apparatus 100 for performing the split-screen display may receive a view instruction for viewing the event notification message received from a user only when a predetermined condition is satisfied.

In this regard, the event notification message may be an event notification message generated by the terminal itself, for example, a time alarm reminder message, an important event reminder message, etc. The event notification message may be an event notification message received by the terminal through an external network (a 3G network, a 5G network, a WiFi network, etc.) such as a content push notification of the application, a message receiving notification, an incoming call notification, etc.

For example, if the event notification message is received while the terminal is executing the application, the input section 101 may allow the view instruction for viewing the event notification message received from the user to be received only when the predetermined condition is satisfied.

In operation S103, the apparatus 100 for performing the split-screen display may split a current screen of the terminal into an original application area and a new application area according to the view instruction received from the user.

In this regard, the original application area may indicate a region for displaying an interface of an application that is currently being executed, and the new application area may indicate a region for displaying an interface of an application related to the received event notification message. Interfaces of all applications that are currently being executed may be displayed on the original application area. For example, when a plurality of applications are being executed in a foreground, the original application area may display respective interfaces of the plurality of applications. That is, the original application area itself may be a target of the split-screen display.

In operation S105, the apparatus 100 for performing the split-screen display may display an interface of an application of the terminal that is currently being executed on the original application area and may display an interface of an application related to the received event notification message on the new application area. Specifically, the interface of the application that is currently being executed and the interface of the application related to the received event notification message may be obtained, and the obtained interfaces of the applications may be displayed on the original application area and the new application area according to corresponding settings.

Furthermore, the split-screen display may be canceled according to a user instruction.

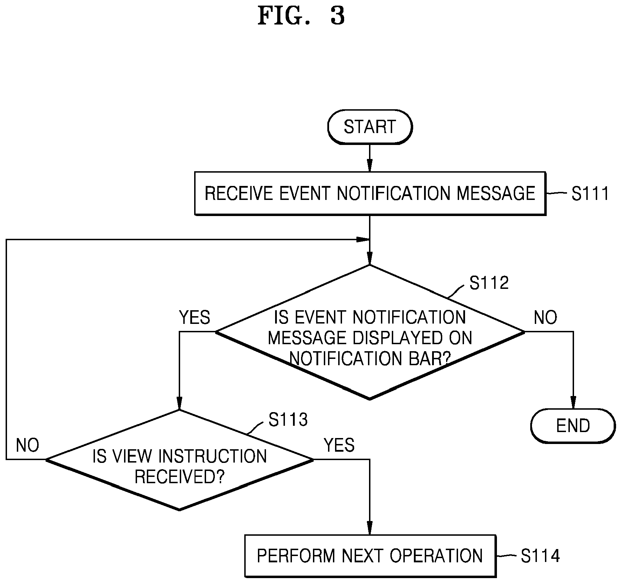

FIG. 3 is a flowchart of an operation of receiving a view instruction for viewing an event notification message, according to an embodiment of the present disclosure.

The apparatus 100 for performing a split-screen display may receive the view instruction for viewing the event notification message only under a predetermined condition. For example, the predetermined condition for receiving the instruction may be displaying of the event notification message on a notification bar. A terminal may determine whether to display the event notification message on the notification bar according to a user setting. Setting the event notification message not to be displayed on the notification bar may mean that a user will check the event notification message later, which may mean that the user does not want the split-screen display at the present time.

As shown in FIG. 3, when the terminal executes an application, if the event notification message is received (operation S111), the apparatus 100 for performing the split-screen display may determine whether the event notification message is displayed on the notification bar (operation S112). Not scrolling and displaying the event notification message on the notification bar may mean that the user does not intend to perform screen splitting. In this case, an operation of receiving the view instruction may end. When the event notification message is displayed on the notification bar, it may be determined whether the view instruction for viewing the event notification message is received (operation S113). When the view instruction with respect to the event notification message is not received, it may be returned to operation S112. While the notification message is displayed on the notification bar, the apparatus 100 for performing the split-screen display may continuously determine whether the view instruction for viewing the event notification message is received (operation S113). When the view instruction for viewing the event notification message is received, the 100 for performing the split-screen display may sequentially perform operations according to the received view instruction (operation S114).

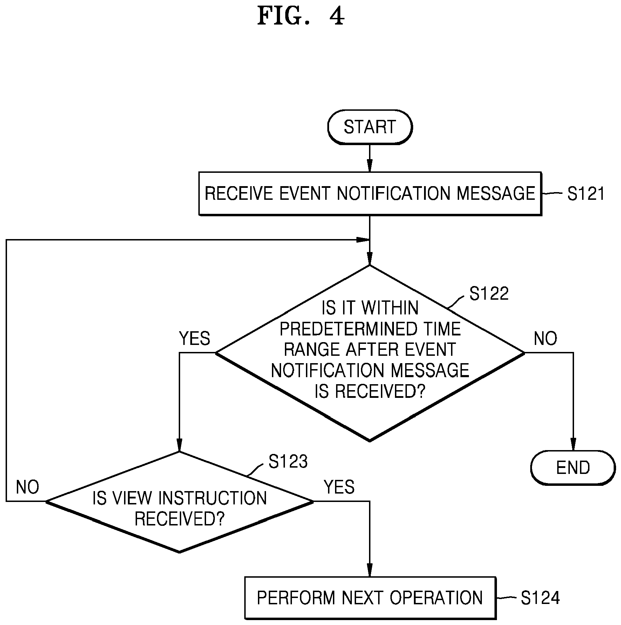

FIG. 4 is a flowchart of an operation of receiving a view instruction for viewing an event notification message, according to another embodiment of the present disclosure.

The apparatus 100 for performing a split-screen display may receive the view instruction for viewing the event notification message only under a predetermined condition. For example, the predetermined condition for receiving the instruction may be means within a predetermined time range after the event notification message is received.

As shown in FIG. 4, when a terminal executes an application, the apparatus 100 for performing the split-screen display may receive the event notification message (operation S121). If the event notification message is received, the apparatus 100 for performing the split-screen display may determine whether the instruction is received within the predetermined time range after the event notification message is received (operation S122). Passing the predetermined time range after the event notification message is received may mean that the user does not intend to perform screen splitting. In this case, an operation of receiving the view instruction may end. Within the predetermined time range after the event notification message is received, the apparatus 100 for performing the split-screen display may determine whether the view instruction for viewing the received event notification message is received in operation S123. When the view instruction with respect to the event notification message is not received, it may be returned to operation S112. While the notification message is displayed on the notification bar, the apparatus 100 for performing the split-screen display may return to operation S122 to continuously determine whether the instruction is received within the predetermined time range after the event notification message is received. When the view instruction for viewing the message is received, operations may be sequentially performed according to the view instruction received from a user (operation S124).

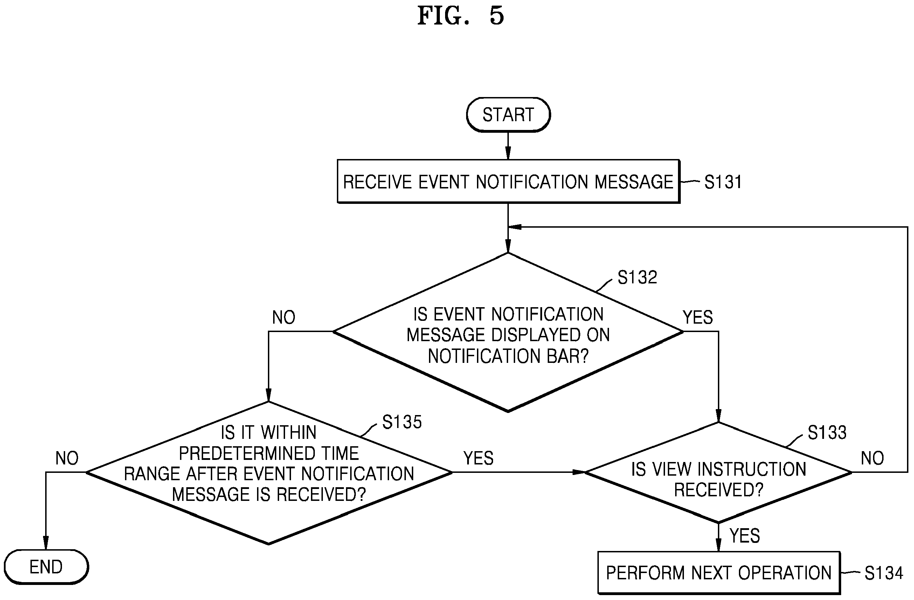

FIG. 5 is a flowchart of an operation of receiving a view instruction for viewing an event notification message, according to another embodiment of the present disclosure.

The apparatus 100 for performing a split-screen display may receive the view instruction for viewing the event notification message only under a predetermined condition. For example, the predetermined condition of receiving the instruction may be displaying the event notification message on a notification bar or within a predetermined time range after the event notification message is received.

As shown in FIG. 5, when a terminal executes an application, the apparatus 100 for performing the split-screen display may receive the event notification message (operation S131). If the event notification message is received, the apparatus 100 for performing the split-screen display may determine whether the event notification message is displayed on the notification bar (operation S132). If the event notification message scrolls and is displayed on the notification bar, the apparatus 100 for performing the split-screen display may determine whether the view instruction for viewing the event notification message is received in operation S133. If the view instruction with respect to the event notification message is received, the apparatus 100 for performing the split-screen display may sequentially perform operations according to the view instruction received from the user in operation S134. If the view instruction with respect to the event notification message is not received, the apparatus 100 for performing the split-screen display may return to operation S132 to continuously determine whether the event notification message is displayed on the notification bar. When the event notification message is not displayed on the notification bar, the apparatus 100 for performing the split-screen display may determine whether the instruction is received within the predetermined time range after the event notification message is received (operation S135). Passing the predetermined time range after the event notification message is received may mean that the user does not intend to perform screen splitting. In this case, an operation of receiving the view instruction may end. Within the predetermined time range after the event notification message is received, the apparatus 100 for performing the split-screen display may determine whether the view instruction for viewing the received event notification message is received in operation S133. When the view instruction for viewing the message is received, the apparatus 100 for performing the split-screen display may sequentially perform operations according to the view instruction received from a user (operation S134). When the view instruction with respect to the message is not received, the apparatus 100 for performing the split-screen display may return to operation S132 to continuously determine whether the event notification message is displayed on the notification bar.

As described above, through a preset condition with respect to receiving of an instruction, a user instruction may be received only when a user wishes a split-screen manipulation and may not be received in other cases (for example, an inactivation state).

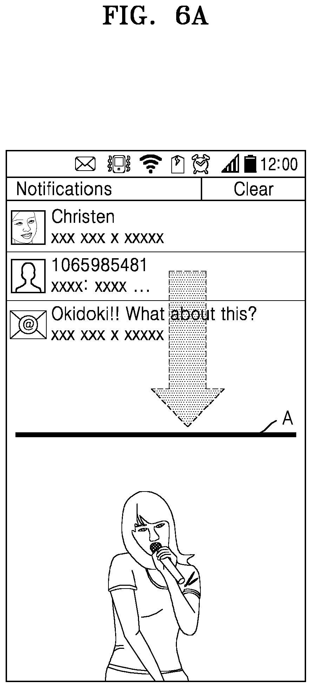

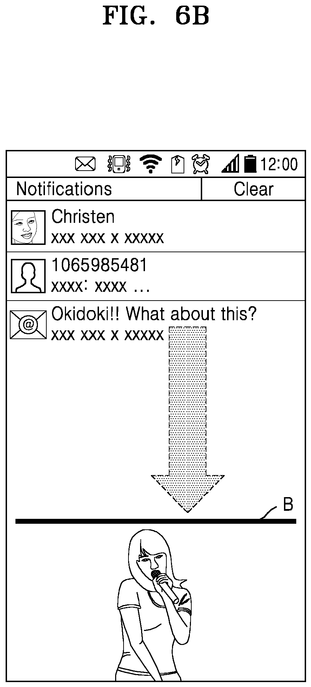

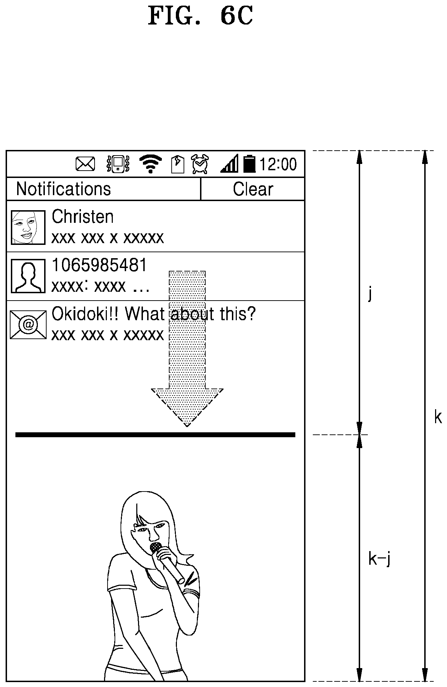

FIGS. 6A, 6B, and 6C illustrate examples of determining a split size of a screen by receiving a view instruction for viewing an event notification message of the present disclosure according to an embodiment of the present disclosure.

For example, while a terminal is executing a video player application, a chatting message, a text message, and an event notification message with respect to receiving of an email may be received.

In this case, the apparatus 100 for performing a split-screen display may receive a touch manipulation that slides downward on a screen from a user as the view instruction in order to view the event notification message to split a current screen into an original application area and a new application area according to the view instruction.

The apparatus 100 for performing the split-screen display may display an interface of the video player application currently executed by the terminal on the original application area and an interface of a notification application related to the received event notification message on the new application area.

The apparatus 100 for performing the split-screen display may determine a split size of the original application area and the new application area according to the slide touch manipulation received from the user.

For example, when the apparatus 100 for performing the split-screen display receives a touch manipulation that slides to a boundary line A of FIG. 6A from the user, the apparatus 100 for performing the split-screen display may split the current screen into the original application area and the new application area with respect to the boundary line A. In this case, the interface of the notification application may be displayed above the boundary line A, and the interface of the video player application may be displayed below the boundary line A.

Also, when the apparatus 100 for performing the split-screen display receives a touch manipulation that slides to a boundary line B of FIG. 6B from the user, the apparatus 100 for performing the split-screen display may split the current screen into the original application area and the new application area with respect to the boundary line B. In this case, the interface of the notification application may be displayed above the boundary line B, and the interface of the video player application may be displayed below the boundary line B.

That is, referring to FIG. 6C, the apparatus 100 for performing the split-screen display may determine a vertical length j of the new application area according to a location at which the downward slide touch manipulation received from the user ends and may determine a vertical length of the original application area as a length obtained by subtracting j from an entire screen length k.

If screen splitting is performed, a size of content displaying the interface of the video player application may be reduced by a proportion of k/(k-j).

In some embodiments, the apparatus 100 for performing the split-screen display may display only a part of an application that is being executed without reducing the application. For example, when the event notification message that notifies receiving of a text message is received while the chatting application is being executed, since the user is interested in only a latest message newly updated in the chatting application, and the latest message is displayed only at a bottom portion of the chatting application, the apparatus 100 for performing the split-screen display may display only the bottom portion that is a part of an original display portion, instead of reducing an interface of the chatting application.

In this way, the apparatus 100 for performing the split-screen display may reduce user inconvenience caused by a reduction in a display screen.

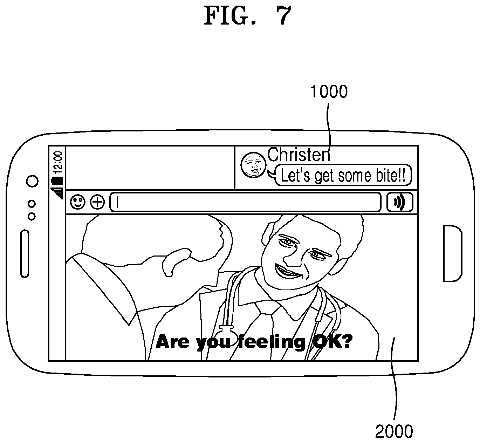

FIG. 7 illustrates an example of determining a split size of a new application area 1000 according to a content size of a received event notification message, according to an embodiment of the present disclosure.

Assuming that the event notification message is a newly received chatting message, and an interface currently executed by a terminal is a video player interface, since a content size of the chatting application is remarkably smaller than a size of content displayed on an interface of a video application that is currently executed, the new application area 1000 for displaying an interface of a chatting application may be split smaller than an original application area 2000 for displaying the interface of the video application.

As another example, the split size of the new application area 1000 may be determined according to a size of a display widget of an application related to the received notification message. In this regard, the display widget may mean a graphical user interface (GUI) factor used to play all pieces of data processed by a relevant application. If the display widget of the application related to the received notification message is great (or the display widget of the application related to the received notification message is obviously greater than a display widget of the application that is currently executing), the apparatus 100 for performing the split-screen display may split the current screen in such a way that the new application area 1000 is greater than the original application area 2000.

Through the method mentioned above, a size proportion of the original application area 2000 and the new application area 1000 may be dynamically determined based on a characteristic of the received event notification message, and thus the user may conveniently check the received event notification message.

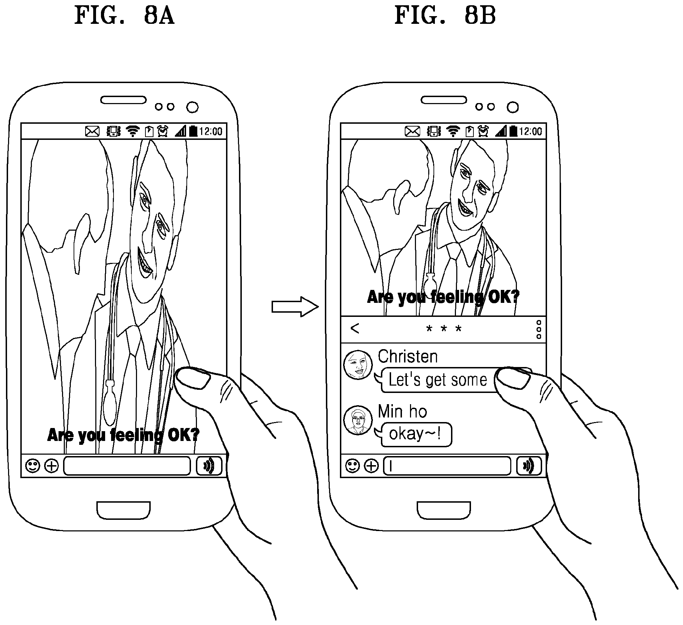

FIGS. 8A and 8B illustrate examples of determining a split location of a new application area based on a way in which a user is currently holding a terminal, according to an embodiment of the present disclosure.

The split location of the new application area may be determined based on the way in which the user is holding the terminal. Specifically, the terminal may determine the way in which the user is currently holding the terminal (for example, a location of the terminal held by the user) by using various types of sensors provided by the terminal. For example, the terminal may sense a deflection value thereof or a rotation angular velocity value through a gyrocompass or sense a capacitance value of the screen thereof through a capacitance sensor to determine the way in which the user is currently holding the terminal according to the sensed value. The new application area may be split at a location that the user conveniently manipulates.

For example, let us assume that the interface currently executed by the terminal is a video player interface, and a received event notification message is a chatting message.

When the user receives a view instruction for viewing the chatting message while holding the terminal as shown in FIG. 8A, the terminal may sense the capacitance value generated by touching the screen of the terminal through the capacitance sensor, determine the location currently held by the user (for example, a lower right location as shown in FIG. 8A) according to the sensed capacitance value, and split the new application area for displaying an interface of a chatting application at the location the user easily manipulates as shown in FIG. 8B.

In this way, the user may make it convenient for manipulation related to the received event notification message in the new application area, and thus the apparatus 100 for performing a split-screen display may enhance a user convenience.

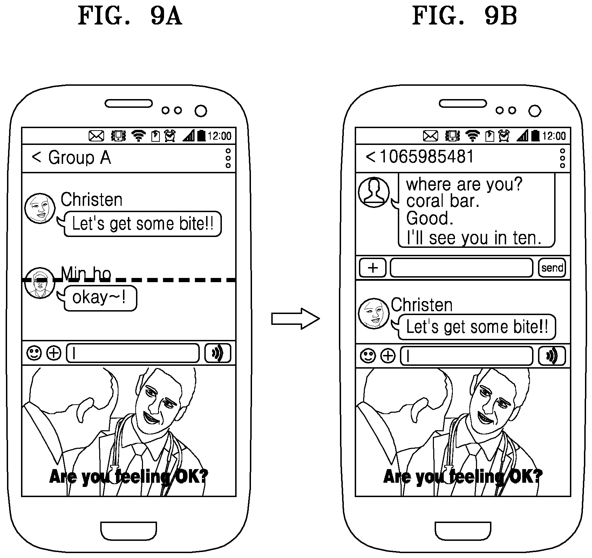

FIGS. 9A and 9B illustrate examples of determining a split location and a split size of a new application area based on a trace of a predetermined touch manipulation, according to an embodiment of the present disclosure.

When a view instruction received from a user includes the predetermined touch manipulation on a current screen of a terminal, the apparatus 100 for performing a split-screen display may determine the split location and the split size of the new application area based on the trace of the predetermined touch manipulation. That is, the predetermined touch manipulation that is the view instruction may be a basis for a screen splitting process. Specifically, since the predetermined touch manipulation may include a slide manipulation (for example, sliding on the current screen by a stylus or a hand) performed by the user on the touch screen, the apparatus 100 for performing the split-screen display may split the current screen of the terminal into an original application area and the new application area based on a generated sliding trace. For example, if the sliding trace is a boundary of the current screen, the apparatus 100 for performing the split-screen display may determine both areas of the boundary as the original application area and the new application area.

For example, let us assume that as shown in FIG. 9A, an event notification message is received while two applications (a chatting application and a video player application) are currently executed by the terminal.

When a view instruction (for example, a slide manipulation of a slide trace in a dotted line as shown in FIG. 9A) performed by the user on a touch screen is received, the generated slide trace may be used as a split line for continuously performing screen splitting, an upper portion of the split line may be used as the new application area, and a lower portion of the split line may be used as the original application area. In this regard, an interface of the chatting application and an interface of the video player application may be displayed on the original application area in a split-screen form.

In this way, the apparatus 100 for performing the split-screen display may determine a location and a size of each area in accordance with a user's desire, thereby enhancing flexibility of the display.

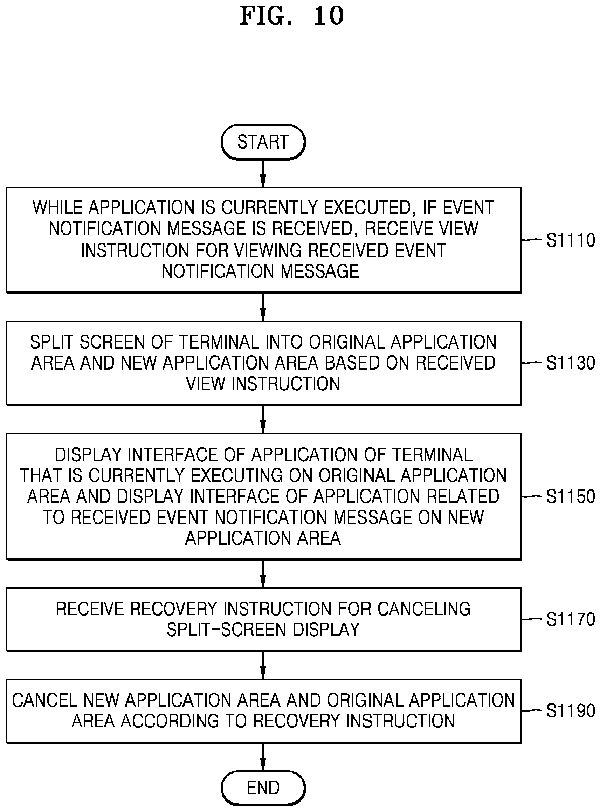

FIG. 10 is a flowchart of a method in which a terminal performs a split-screen display, according to another embodiment of the present disclosure.

Operations S1110, S1130, and S1150 are the same as operations S101, S103, and S105, respectively, described with reference to FIG. 2, and they will not be repeated here.

When a user escapes the split-screen display, the apparatus 100 for performing the split-screen display may receive a recovery instruction for canceling the split-screen display from the user (operation S1170).

The recovery instruction may refer to a screen splitting operation for canceling the split-screen display. For example, an operation in which the user clicks a location inside the new application area to slide therefrom to outside may mean canceling of the new application area, and an operation in which the user clicks a location inside the original application area to slide therefrom to outside may mean canceling of the original application area.

Furthermore, the recovery instruction may be a voice instruction.

The apparatus 100 for performing the split-screen display may cancel a new application area and an original application area according to the recovery instruction received in operation S1170.

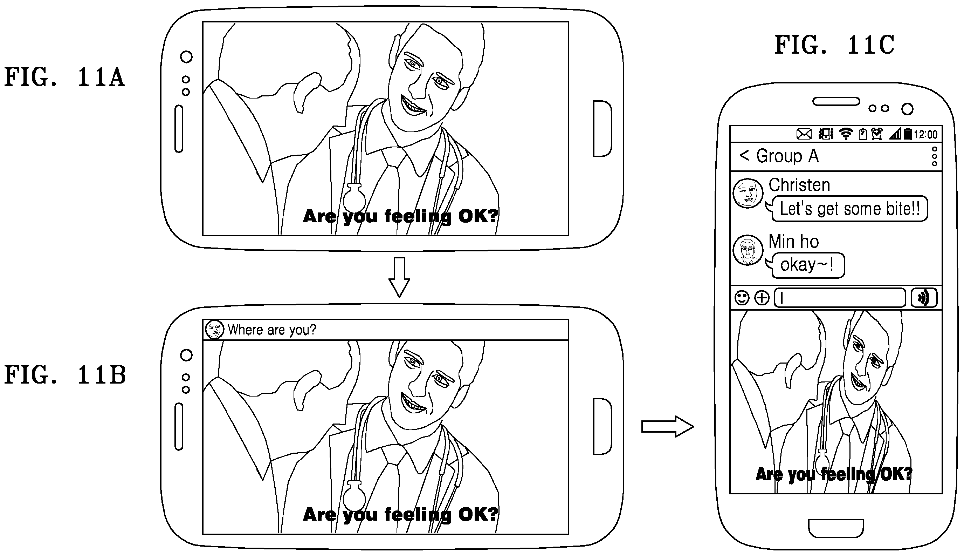

FIGS. 11A, 11B, and 11C illustrate examples in which a terminal performs a split-screen display, according to an embodiment of the present disclosure.

When the terminal currently performs a whole screen display, the apparatus 100 for performing the split-screen display may receive a view instruction like a rotation of the terminal (a rotation to the left or right), a rotation of the terminal while a notification bar is displayed (for example, when the event notification message scrolls and is displayed on the notification bar, the user rotates the terminal to the left or right while viewing the notification bar), performing of a predetermined touch manipulation (for example, sliding a current screen by a stylus or a hand, clicking a button for providing screen splitting on the screen, etc.), an input a predetermined voice instruction, and performing of a predetermined operation from a user. However, the instruction that the apparatus 100 for performing the split-screen display may receive from the user is not limited thereto.

Let us assume that a predetermined condition for the apparatus 100 for performing the split-screen display to receive the view instruction is that the event notification message is displayed on the notification bar, the view instruction received from the user is the rotation of the terminal, an application currently executed on the whole screen of the terminal is a video player application, and the event notification message is a chatting message.

For example, as shown in FIG. 11A, when the video player application is currently executed on the display screen of the terminal, as shown in FIG. 11B, it may be displayed on the notification bar that the chatting message is received. If a terminal rotation manipulation is received from the user as shown in FIG. 11C in the meantime, the apparatus 100 for performing the split-screen display may split the current screen of the terminal into an original application area and a new application area according to a rotation manipulation of the user, display an interface of the video player application on the original application area, and display an interface of the chatting application on the new application area.

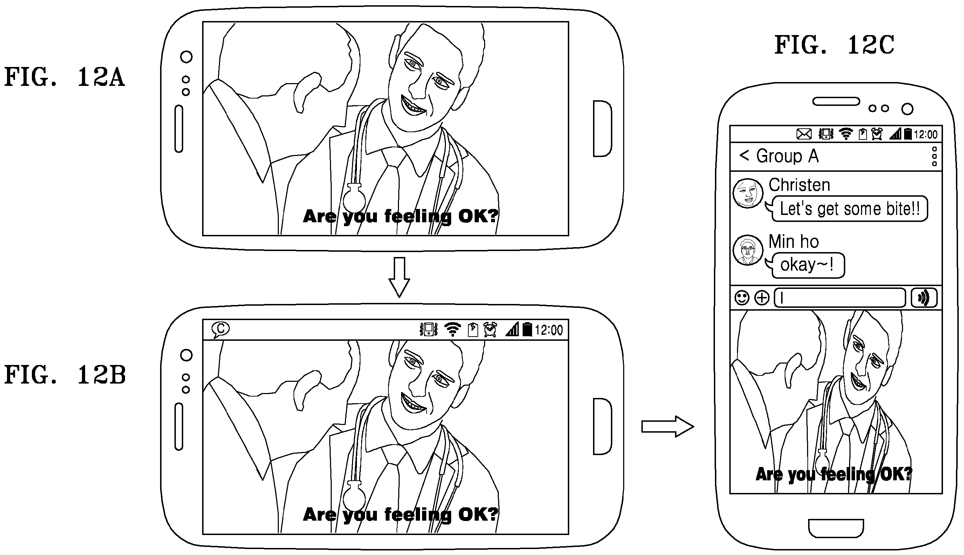

FIGS. 12A, 12B, and 12C illustrate examples in which a terminal performs a split-screen display, according to another embodiment of the present disclosure.

Let us assume that a predetermined condition for receiving a view instruction is that an event notification message is received within a predetermined time range, the view instruction received from a user is a rotation of the terminal, an application currently executed on a whole screen of the terminal is a video player application, and the event notification message is a chatting message.

As shown in FIG. 12A, when the video player application is currently executed on a screen of the terminal, as shown in FIG. 12B, the chatting message may be received and an icon of a chatting application may be displayed on a top end of the screen within the predetermined time range. If a terminal rotation manipulation is received from the user as shown in FIG. 12C in the meantime, the apparatus 100 for performing the split-screen display may split the current screen of the terminal into an original application area and a new application area according to a rotation manipulation of the user, display an interface of the video player application on the original application area, and display an interface of the chatting application on the new application area.

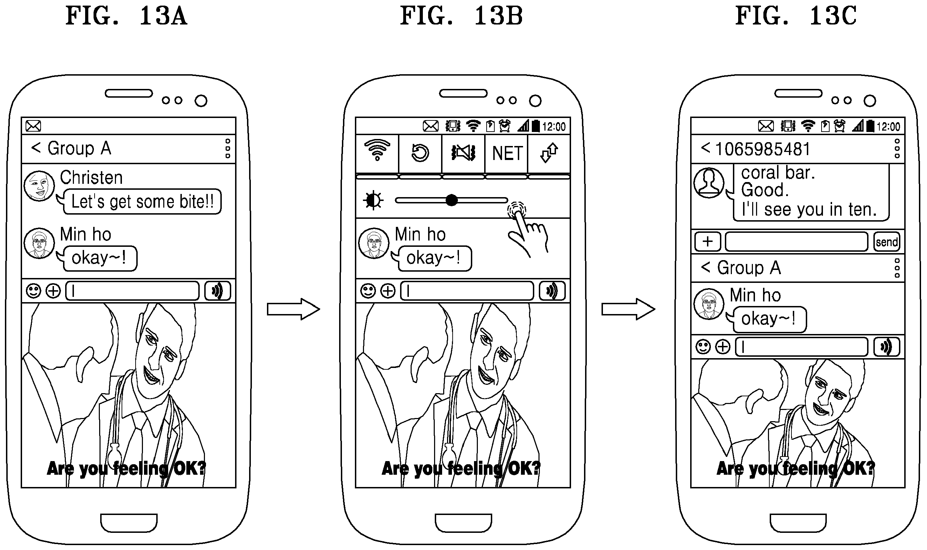

FIGS. 13A, 13B, and 13C illustrate examples in which a terminal performs a split-screen display, according to another embodiment of the present disclosure.

Let us assume that a predetermined condition for receiving a view instruction is that the view instruction is received within a predetermined time range after an event notification message is received, the view instruction received from a user is to drag a notification bar downward, the terminal is currently executing a video player application and a chatting application on a whole screen of the terminal, and the event notification message is a text message.

As shown in FIG. 13A, while two applications of the video player application and the chatting application are currently executed on a display screen of the terminal, as shown in FIG. 13B, if a touch manipulation to slide the notification bar downward is received from the user within the predetermined time range after a text notification message is received, as shown in FIG. 13C, the apparatus 100 for performing the split-screen display may split the current screen of the terminal into an original application area and a new application area according to a rotation manipulation of the user, display an interface of the video player application and an interface of the chatting application on the original application area, and display an interface of a text application on the new application area.

In the examples of the methods in which the apparatus 100 for performing the split-screen display performs splitting manipulation related to a screen, screen splitting may be performed without considering a current screen display state of the terminal or may be performed by considering the current screen display state of the terminal when the view instruction is received from the user.

When the apparatus 100 for performing the split-screen display determines whether to perform screen splitting by considering the current screen display state of the terminal, the apparatus 100 for performing the split-screen display may determine whether the terminal is in a state suitable for performing screen splitting. Specifically, when the terminal is in the state suitable for performing screen splitting, the apparatus 100 for performing the split-screen display may split the current screen of the terminal into the original application area and the new application area according to the view instruction received from the user. Also, when the terminal is not in the state suitable for performing screen splitting, the apparatus 100 for performing the split-screen display may not perform screen splitting.

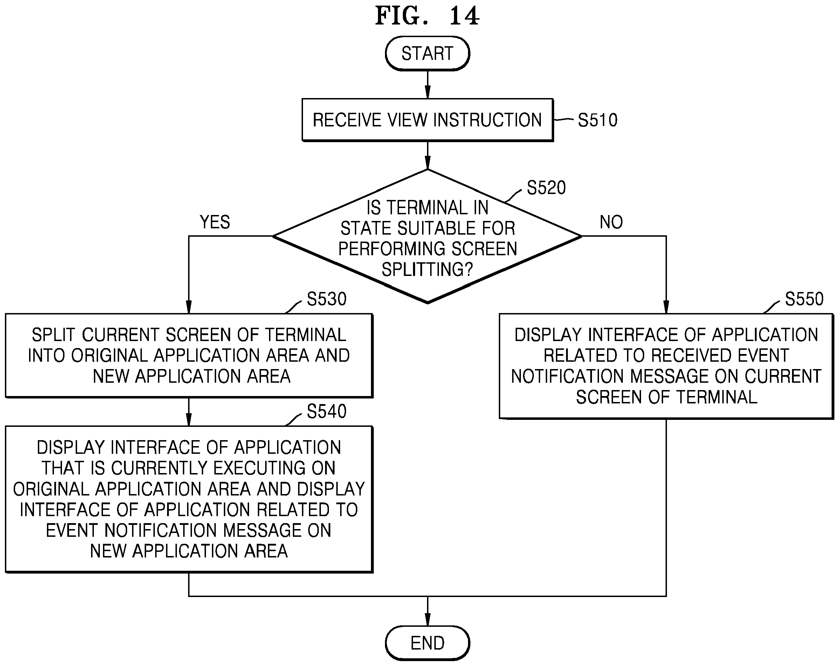

FIG. 14 is a flowchart of a method in which a terminal performs a split-screen display, according to another embodiment of the present disclosure.

The method may be performed by the apparatus 100 of FIG. 1 and by a computer program like an application for performing the split-screen display installed in the terminal.

When an event notification message is received in the terminal that is currently executing the application, a view instruction for viewing the received event notification message may be received (operation S510).

The apparatus 100 for performing the split-screen display may determine whether the terminal is in a state suitable for performing screen splitting in operation S520. In some embodiments, the state suitable for performing screen splitting may mean a state in which the terminal is currently performing a whole screen display, and the state not suitable for performing screen splitting may mean a state in which the terminal is currently performing the split-screen display.

When the terminal is in the state suitable for performing screen splitting, the apparatus 100 for performing the split-screen display may split a current screen of the terminal into an original application area and a new application area in operation S530.

Also, the apparatus 100 for performing the split-screen display may display an interface of the application that is currently executed by the terminal on the original display area and display an interface of an application related to the received event notification message on the new application area in operation S540.

Also, when the terminal is not in the state suitable for performing screen splitting, the apparatus 100 for performing the split-screen display may display the interface of the application related to the received event notification message on the current screen according to the view instruction received from the user in operation S550.

For example, a case where the terminal is in the state suitable for performing screen splitting may mean a case where the terminal is currently in a whole screen display state. In this case, the apparatus 100 for performing the split-screen display may perform screen splitting when receiving the view instruction. Meanwhile, when the terminal is not in the state suitable for performing screen splitting, the terminal may be currently performing the split-screen display. In this case, the apparatus 100 for performing the split-screen display may not perform screen splitting even when receiving the view instruction.

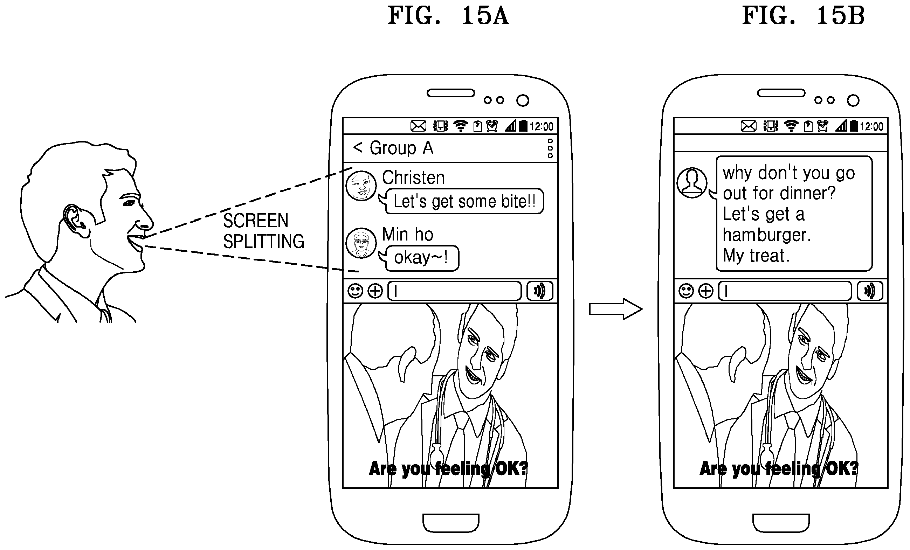

FIGS. 15A and 15B illustrate examples in which a terminal performs a split-screen display, according to another embodiment of the present disclosure.

Let us assume that a predetermined condition for receiving a view instruction according to an embodiment is that the view instruction is received within a predetermined time range after an event notification message is received, the received view instruction is to a voice instruction, applications currently displayed on a split-screen of the terminal are a video player application and a chatting application, and the event notification message is a text message.

As shown in FIG. 15A, when the two applications that are currently executed on the split-screen display of the terminal are the video player application and the chatting application, the text message may be received and an icon of the text message may be displayed on a top end of the screen. If a user voice "screen splitting" is received within the predetermined time range therefrom, as shown in FIG. 15B, the apparatus 100 for performing the split-screen display may change and display a text application the chatting application. After an interface of an application related to the received event notification message is displayed after being replaced with an interface of at least one of the applications currently executed by the terminal, the application related to the received event notification message may also be displayed after being switched with at least one of the applications currently executed by the terminal according to a user switch manipulation. For example, the apparatus 100 for performing the split-screen display may switch an interface of the chatting application and an interface of the text application and display the interfaces on an uppermost layer of the screen.

As described above, methods in which the apparatus 100 for performing the split-screen display switches and displays a plurality of application interfaces may be implemented in various embodiments. For example, while the terminal is executing the video player application, when messages are received from the chatting application, the text application, and an email application, since applications for suitably processing event notification messages are different, the apparatus 100 for performing the split-screen display may switch and display the plurality of application interfaces according to a predetermined view instruction such that the user easily executes the applications in a narrow area. This method will be described with reference to FIGS. 16 through 20.

FIGS. 16A, 16B, and 16C illustrate examples of a method in which a terminal performs a split-screen display, according to an embodiment of the present disclosure.

As shown in FIG. 16A, a plurality of event notification messages may be displayed on a notification bar application interface in the form of a list. The apparatus 100 for performing the split-screen display may receive an input of selecting one of the list as a view instruction and then display an interface of an application selected to replace a notification bar application on an application area that has displayed the notification bar application.

For example, the apparatus 100 for performing the split-screen display may receive an input of selecting a chatting message as the view instruction and, as shown in FIG. 16B, display a chatting application on an area that has displayed the notification bar application.

Also, if a comeback instruction or an input meaning 'back" is received as the view instruction, the apparatus 100 for performing the split-screen display may come back to the notification bar application again to display the event notification messages. In this regard, a chatting message that has been checked may be deleted from a notification bar.

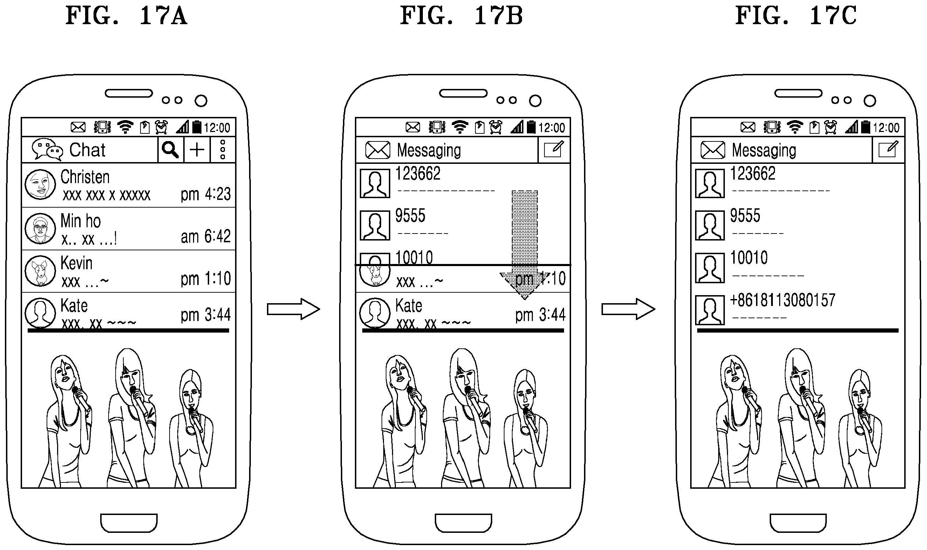

FIGS. 17A, 17B, and 17C illustrate examples of a method in which a terminal performs a split-screen display, according to another embodiment of the present disclosure.

As shown in FIG. 17A, while a chatting application and a video player application are executed, when an event notification message indicating that a text message is received is received, the apparatus 100 for performing the split-screen display may receive a downward slide touch input with respect to one of areas in which the chatting application and the video player application are executed as a view instruction.

In this case, the apparatus 100 for performing the split-screen display may replace an interface of an application that has been displayed on the area in which the downward slide touch input is received to display an interface of a text application as shown in FIG. 17C.

In some embodiments, the apparatus 100 for performing the split-screen display may automatically select an application area that is to be replaced according to a characteristic of the application related to the received event notification message irrespective of the area in which the downward slide touch input of the user is received.

For example, in the embodiment of FIG. 17, since the text application is more similar to the chatting application than the video player application, when the downward slide touch input of the user is received, the apparatus 100 for performing the split-screen display may display the interface of the text application instead of an interface of the chatting application.

Also, if the downward slide touch input is received again as the view instruction, the apparatus 100 for performing the split-screen display may switch and display the interface of the chatting application.

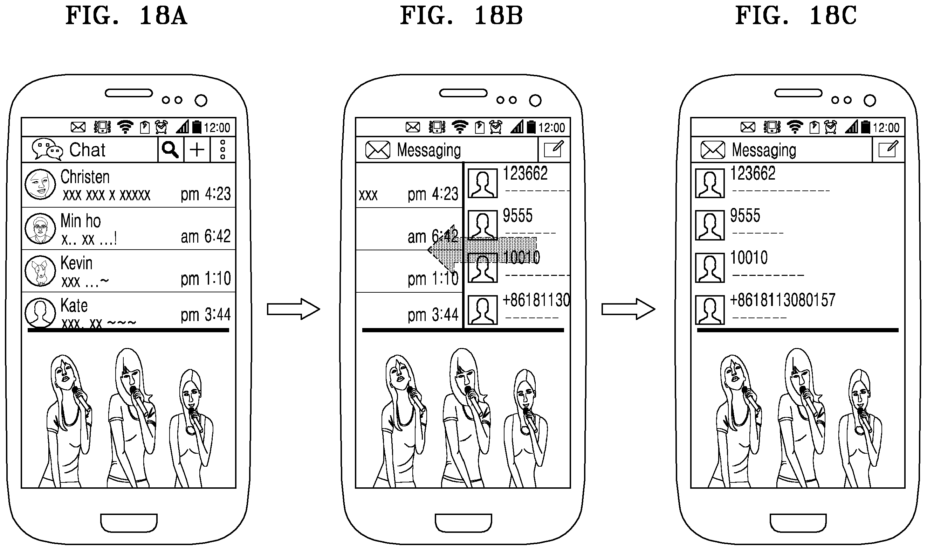

FIGS. 18A, 18B, and 18C illustrate examples of a method in which a terminal performs a split-screen display, according to another embodiment of the present disclosure.

As shown in FIG. 18A, while a chatting application and a video player application are executed, when an event notification message indicating that a text message is received is received, the apparatus 100 for performing the split-screen display may receive a left slide touch input with respect to one of areas in which the chatting application and the video player application are executed as a view instruction. In this case, the apparatus 100 for performing the split-screen display may replace an interface of an application that has been displayed on the area in which the left slide touch input is received to display an interface of a text application as shown in FIG. 18C.

In some embodiments, the apparatus 100 for performing the split-screen display may automatically select an application area that is to be replaced according to a characteristic of the application related to the received event notification message irrespective of the area in which the left slide touch input of the user is received.

For example, in the embodiment of FIG. 18, since the text application is more similar to the chatting application than the video player application, when the left slide touch input of the user is received, the apparatus 100 for performing the split-screen display may display the interface of the text application instead of an interface of the chatting application.

Also, if the left slide touch input is received again as the view instruction, the apparatus 100 for performing the split-screen display may switch and display the interface of the chatting application.

In some embodiments, if a right slide touch input is received as the view instruction, the apparatus 100 for performing the split-screen display may switch and display the interface of the chatting application.

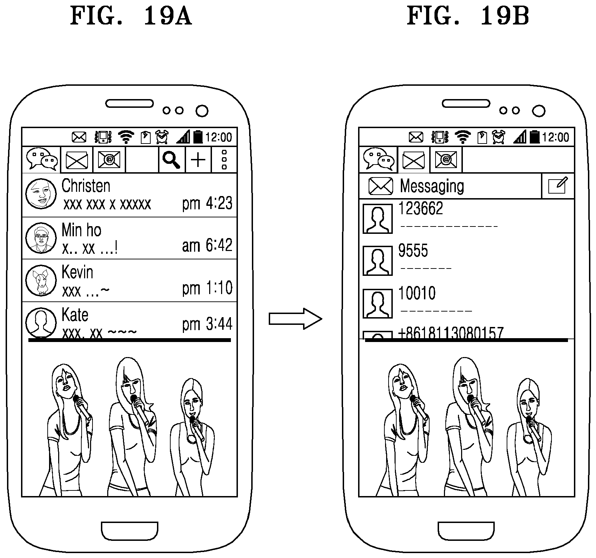

FIGS. 19A and 19B illustrate examples of a method in which a terminal performs a split-screen display, according to another embodiment of the present disclosure.

When the apparatus 100 for performing the split-screen display switches and displays a plurality of application interfaces, the plurality of application interfaces may be displayed in the form of taps as shown in FIG. 19A. The apparatus 100 for performing the split-screen display may receive an input of selecting one of the taps as a view instruction and then display an interface of an application selected to replace an application that is currently executed. For example, if an input of selecting a tap of a text application is received as the view instruction, the apparatus 100 for performing the split-screen display may replace an interface of a chatting application to display the text application as shown in FIG. 19B.

In the same way, the apparatus 100 for performing the split-screen display may receive an input of selecting a tap as the view instruction and switch and display respective application interfaces.

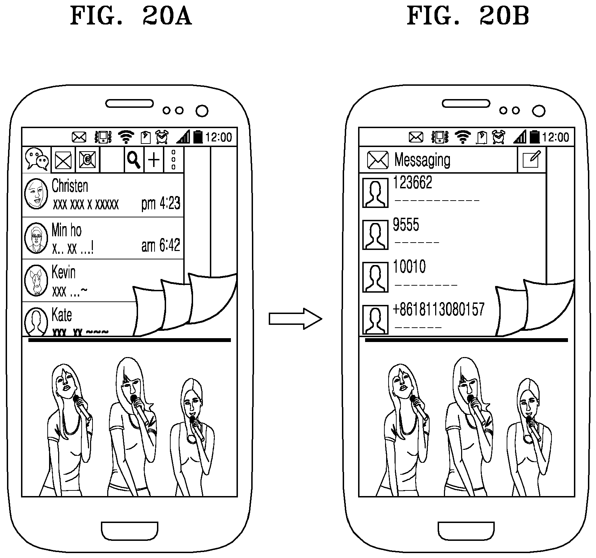

FIGS. 20A and 20B illustrate examples of a method in which a terminal performs a split-screen display, according to another embodiment of the present disclosure.

When the apparatus 100 for performing the split-screen display switches and displays a plurality of application interfaces, the plurality of application interfaces may be displayed in the form of pages as shown in FIG. 20A. The apparatus 100 for performing the split-screen display may receive a flipping input as a view instruction and then display an interface of a predetermined application instead of an application that is currently executed. A method of switching applications may be determined in various ways. For example, the apparatus 100 for performing the split-screen display may determine a switch order of the applications according to an order in which event notification messages are received. When a text message is received after a chatting message is received, if the flipping input is received as the view instruction while a chatting application is being executed, the apparatus 100 for performing the split-screen display may display a text application instead of an interface of the chatting application as shown in FIG. 20B.

In the same way, the apparatus 100 for performing the split-screen display may receive the flipping input as the view instruction and switch and display respective application interfaces.

The present invention may be implemented by storing computer-readable codes in a non-transitory computer-readable storage medium. The non-transitory computer-readable storage medium is any data storage device that stores data which may be thereafter read by a computer system.

The computer-readable codes are configured to execute operations of implementing the methods for performing a split-screen display according to the present invention when the computer-readable codes are read, from the non-transitory computer-readable storage medium, and executed by a processor. The computer-readable codes may be implemented by various programming languages. And the functional programs, codes and code segments for embodying the inventive concept may be easily construed by programmers in the art which the inventive concept belongs to.

Examples of the non-transitory computer-readable storage medium include ROM, RAM, CD-ROMs, magnetic tape, floppy disk, optical data storage devices. The non-transitory computer-readable storage medium can also be distributed over a network coupled computer system so that the computer-readable codes are stored and executed in distributed fashion.

While this disclosure has been particularly shown and described with reference to the embodiments thereof, it will be understood by one of ordinary skill in the art that various changes in form and details may be made therein without departing from the scope of the disclosure as defined by the appended claims. The embodiments should be considered in a descriptive sense only and not for purposes of limiting the invention, that is only defined by the appended set of claims. For example, each component described as being a single type may be implemented in a distributed manner, and likewise components described as being distributed may also be implemented in a combined form.

Therefore, the scope of the disclosure is defined not by the detailed description of the disclosure but by the appended claims, and all differences within the scope will be construed as being included in the present disclosure.

## Claims

1. A method, performed by a display apparatus (100), of performing a split-screen display in a terminal, the method comprising:
when an event notification message is received while an application is being executed, determining whether the arrevent notification message is set by the user to be displayed on a notification bar;
when the event notification is displayed on the notification bar: obtaining a view instruction for viewing the received event notification message,
splitting a screen of the terminal into an original application area (2000) and a new application area (1000) based on the received view instruction,
displaying an interface of the application that is being executed in the terminal on the original application area by reducing a size of content of the interface of the application that is being executed, and
displaying an interface of an application related to the received event notification message on the new application area.

2. The method of claim 1, wherein the view instruction is obtained when the event notification message is displayed on a notification bar or within a predetermined time range after the event notification message is received.

3. The method of claim 1, wherein the splitting is performed when the terminal is in a state suitable for performing screen splitting,
wherein, when the terminal is not in the state suitable for performing screen splitting, the interface of the application related to the received event notification message is displayed on the screen of the terminal.

4. The method of claim 3, wherein the state suitable for performing screen splitting is a state in which the terminal is in a whole screen display state, and the state not suitable for performing screen splitting is a state in which the terminal is a split-screen display state.

5. The method of claim 1, wherein the splitting comprises: determining a split size of the new application area according to a size of the received event notification message or a size of a display widget of the application related to the received event notification message.

6. The method of claim 1, wherein the splitting comprises: sensing a location of the terminal being held by a user and determining a split location of the new application area based on the sensed location.

7. The method of claim 1, wherein the view instruction comprises a predetermined touch operation on the screen of the terminal,
wherein the splitting comprises: determining a split location and a split size of the new application area of a trace of the predetermined touch operation.

8. The method of claim 1, further comprising:
obtaining a recovery instruction to cancel the split-screen display; and
canceling the original application area and the new application area according to the recovery instruction.

9. An apparatus (100) for performing a split-screen display in a terminal, the apparatus comprising at least one processor configured to:
when an event notification message is received while an application is being executed, determine whether the event notification message is displayed on a notification bar;
when the event notification is set by the user to be displayed on the notification bar: obtain a view instruction for viewing the received event notification message,
control to split a screen of the terminal into an original application area (2000) and a new application area (1000) based on the obtained view instruction,
control to display an interface of the application that is being executed in the terminal on the original application area by reducing a size of content of the interface of the application that is being executed, and
control to display an interface of an application related to the received event notification message on the new application area.

10. The apparatus of claim 9, wherein the view instruction is obtained when the event notification message is displayed on a notification bar or within a predetermined time range after the event notification message is received.

11. The apparatus of claim 9, wherein the at least one processor is configured to control to perform splitting when the terminal is in a state suitable for performing screen splitting, and, when the terminal is not in the state suitable for performing screen splitting, displays the interface of the application related to the received event notification message on the screen of the terminal.

12. The apparatus of claim 11, wherein the state suitable for performing screen splitting is a state in which the terminal is in a whole screen display state, and the state not suitable for performing screen splitting is a state in which the terminal is a split-screen display state.

13. The apparatus of claim 9, wherein the at least one processor is configured to control to determine a split size of the new application area according to a size of the received event notification message or a size of a display widget of the application related to the received event notification message.

14. The apparatus of claim 9, wherein the at least one processor is configured to control to sense a location of the terminal being held by a user and determine a split location of the new application area based on the sensed location.

15. The apparatus of claim 9, wherein the view instruction comprises a predetermined touch operation on the screen of the terminal,
wherein the at least one processor is configured to control to determine a split location and a split size of the new application area according to a trace of the predetermined touch operation.

## Patentansprüche

1. Verfahren, das von einer Anzeigevorrichtung (100) durchgeführt wird, zum Durchführen einer geteilten Bildschirmanzeige in einem Endgerät, wobei das Verfahren umfasst:
wenn eine Ereignisbenachrichtigungsnachricht empfangen wird, während eine Anwendung ausgeführt wird, Bestimmen, ob die Ereignisbenachrichtigungsnachricht vom Benutzer so eingestellt ist, dass sie auf einer Benachrichtigungsleiste angezeigt wird;
wenn die Ereignisbenachrichtigung auf der Benachrichtigungsleiste angezeigt wird:
Erhalten eines Ansichtsbefehls zum Ansehen der empfangenen Ereignisbenachrichtigungsnachricht, Teilen eines Bildschirms des Endgeräts in einen ursprünglichen Anwendungsbereich (2000) und einen neuen Anwendungsbereich (1000) basierend auf dem empfangenen Ansichtsbefehl, Anzeigen einer Schnittstelle der Anwendung, die im Endgerät ausgeführt wird, im ursprünglichen Anwendungsbereich, indem eine Größe von Inhalt der Schnittstelle der Anwendung, die ausgeführt wird, verringert wird, und Anzeigen einer Schnittstelle einer auf die empfangene Ereignisbenachrichtigungsnachricht bezogenen Anwendung im neuen Anwendungsbereich.

2. Verfahren nach Anspruch 1, wobei der Ansichtsbefehl erhalten wird, wenn die Ereignisbenachrichtigungsnachricht auf einer Benachrichtigungsleiste oder innerhalb eines vorbestimmten Zeitbereichs, nachdem die Ereignisbenachrichtigungsnachricht empfangen wird, angezeigt wird.

3. Verfahren nach Anspruch 1, wobei das Teilen durchgeführt wird, wenn sich das Endgerät in einem Zustand befindet, der zum Durchführen einer Bildschirmteilung geeignet ist,
wobei, wenn sich das Endgerät nicht in einem zum Durchführen einer Bildschirmteilung geeigneten Zustand befindet, die Schnittstelle der auf die empfangene Ereignisbenachrichtigungsnachricht bezogenen Anwendung auf dem Bildschirm des Endgeräts angezeigt wird.

4. Verfahren nach Anspruch 3, wobei der zum Durchführen einer Bildschirmteilung geeignete Zustand ein Zustand ist, in dem sich das Endgerät in einem Ganzbild-Anzeigezustand befindet, und der zum Durchführen einer Bildschirmteilung ungeeignete Zustand ein Zustand ist, in dem sich das Endgerät in einem Zustand geteilter Bildschirmanzeige befindet.

5. Verfahren nach Anspruch 1, wobei das Teilen umfasst:
Bestimmen einer Teilungsgröße des neuen Anwendungsbereichs gemäß einer Größe der empfangenen Ereignisbenachrichtigungsnachricht oder einer Größe eines Anzeige-Widgets der auf die empfangene Ereignisbenachrichtigungsnachricht bezogenen Anwendung.

6. Verfahren nach Anspruch 1, wobei das Teilen umfasst:
Erfassen einer Position des Endgeräts, das von einem Benutzer gehalten wird, und Bestimmen einer Teilungsposition des neuen Anwendungsbereichs basierend auf der erfassten Position.

7. Verfahren nach Anspruch 1, wobei der Ansichtsbefehl eine vorbestimmte Berührungsbedienung auf dem Bildschirm des Endgeräts umfasst, wobei das Teilen umfasst:
Bestimmen einer Teilungsposition und einer Teilungsgröße des neuen Anwendungsbereichs einer Spur der vorbestimmten Berührungsbedienung.

8. Verfahren nach Anspruch 1, ferner umfassend:
Erhalten eines Wiederherstellungsbefehls, um die geteilte Bildschirmanzeige zu löschen;
und Löschen des ursprünglichen Anwendungsbereichs und des neuen Anwendungsbereichs gemäß dem Wiederherstellungsbefehl.

9. Vorrichtung (100) zum Durchführen einer geteilten Bildschirmanzeige in einem Endgerät, wobei die Vorrichtung mindestens einen Prozessor umfasst, der konfiguriert ist, um:
wenn eine Ereignisbenachrichtigungsnachricht empfangen wird, während eine Anwendung ausgeführt wird, zu bestimmen, ob die Ereignisbenachrichtigungsnachricht auf einer Benachrichtigungsleiste angezeigt wird;
wenn die Ereignisbenachrichtigung durch den Benutzer so eingestellt wird, dass sie auf der Benachrichtigungsleiste angezeigt wird:
einen Ansichtsbefehl zum Ansehen der empfangenen Ereignisbenachrichtigungsnachricht zu erhalten, so zu steuern, dass ein Bildschirm des Endgeräts in einen ursprünglichen Anwendungsbereich (2000) und einen neuen Anwendungsbereich (1000) basierend auf dem erhaltenen Ansichtsbefehl geteilt wird, so zu steuern, dass eine Schnittstelle der Anwendung, die in dem Endgerät ausgeführt wird, in dem ursprünglichen Anwendungsbereich angezeigt wird, indem eine Größe von Inhalt der Schnittstelle der Anwendung, die ausgeführt wird, verringert wird, und so zu steuern, dass eine Schnittstelle einer auf die empfangene Ereignisbenachrichtigungsnachricht bezogenen Anwendung in dem neuen Anwendungsbereich angezeigt wird.

10. Vorrichtung nach Anspruch 9, wobei der Ansichtsbefehl erhalten wird, wenn die Ereignisbenachrichtigungsnachricht auf einer Benachrichtigungsleiste oder innerhalb eines vorbestimmten Zeitbereichs, nachdem die Ereignisbenachrichtigungsnachricht empfangen wird, angezeigt wird.

11. Vorrichtung nach Anspruch 9, wobei der mindestens eine Prozessor konfiguriert ist, um so zu steuern, dass eine Teilung durchgeführt wird, wenn sich das Endgerät in einem zum Durchführen einer Bildschirmteilung geeigneten Zustand befindet, und, wenn sich das Endgerät nicht in dem zum Durchführen einer Bildschirmteilung geeigneten Zustand befindet, die Schnittstelle der auf die empfangene Ereignisbenachrichtigungsnachricht bezogenen Anwendung auf dem Bildschirm des Endgeräts anzeigt.

12. Vorrichtung nach Anspruch 11, wobei der Zustand, der zum Durchführen einer Bildschirmteilung geeignet ist, ein Zustand ist, in dem sich das Endgerät in einem Gesamtbildschirm-Anzeigezustand befindet, und der zum Durchführen einer Bildschirmteilung ungeeignete Zustand ein Zustand ist, in dem das Endgerät ein Zustand einer geteilten Bildschirmanzeige ist.

13. Vorrichtung nach Anspruch 9, wobei der mindestens eine Prozessor konfiguriert ist, um so zu steuern, dass eine Teilungsgröße des neuen Anwendungsbereichs gemäß einer Größe der empfangenen Ereignisbenachrichtigungsnachricht oder einer Größe eines Anzeige-Widgets der auf die empfangene Ereignisbenachrichtigungsnachricht bezogenen Anwendung bestimmt wird.

14. Vorrichtung nach Anspruch 9, wobei der mindestens eine Prozessor konfiguriert ist, um so zu steuern, dass eine Position des von einem Benutzer gehaltenen Endgeräts erfasst wird und eine Teilungsposition des neuen Anwendungsbereichs basierend auf der erfassten Position bestimmt wird.

15. Vorrichtung nach Anspruch 9, wobei der Ansichtsbefehl eine vorbestimmte Berührungsbedienung auf dem Bildschirm des Endgeräts umfasst, wobei der mindestens eine Prozessor konfiguriert ist, um so zu steuern, dass eine Teilungsposition und eine Teilungsgröße des neuen Anwendungsbereichs gemäß einer Spur der vorbestimmten Berührungsbedienung bestimmt wird.

## Revendications

1. Procédé, réalisé par un appareil d'affichage (100), de réalisation d'un affichage à écran divisé dans un terminal, le procédé comprenant :
lorsqu'un message de notification d'événement est reçu pendant qu'une application est exécuté, la détermination pour savoir si le message de notification d'événement est défini par l'utilisateur pour être affiché sur une barre de notification ;
lorsque la notification d'événement est affichée dans la barre de notification :
l'obtention d'une instruction de visualisation pour visualiser le message de notification d'événement reçu, la division d'un écran du terminal en une zone d'application d'origine (2000) et une nouvelle zone d'application (1000) sur la base de l'instruction de visualisation reçue, l'affichage d'une interface de l'application qui est exécuté dans le terminal sur la zone d'application d'origine en réduisant une taille de contenu de l'interface de l'application qui est exécutée et l'affichage d'une interface d'une application liée au message de notification d'événement reçu sur la nouvelle zone d'application.

2. Procédé selon la revendication 1, ladite instruction de visualisation étant obtenue lorsque le message de notification d'événement est affiché sur une barre de notification ou dans une plage de temps prédéfinie après la réception du message de notification d'événement.

3. Procédé selon la revendication 1, ladite division étant effectuée lorsque le terminal est dans un état propice à la réalisation d'une division d'écran,
lorsque le terminal n'est pas dans l'état propice à la réalisation d'une division d'écran, ladite interface de l'application liée au message de notification d'événement reçu étant affichée sur l'écran du terminal.

4. Procédé selon la revendication 3, ledit état propice à la réalisation d'une division d'écran étant un état dans lequel le terminal est dans un état d'affichage à écran entier, et ledit état non propice à la réalisation d'une division d'écran étant un état dans lequel le terminal est un état d'affichage à écran divisé.

5. Procédé selon la revendication 1, ladite division comprenant :
la détermination d'une taille de division de la nouvelle zone d'application selon une taille du message de notification d'événement reçu ou d'une taille d'un composant graphique d'affichage de l'application liée au message de notification d'événement reçu.

6. Procédé selon la revendication 1, ladite division comprenant :
la détection d'un emplacement du terminal détenu par un utilisateur et la détermination d'un emplacement de division de la nouvelle zone d'application sur la base de l'emplacement détecté.

7. Procédé selon la revendication 1, ladite instruction de visualisation comprenant une opération tactile prédéfinie sur l'écran du terminal, ladite division comprenant :
la détermination d'un emplacement de division et d'une taille de division de la nouvelle zone d'application d'une trace de l'opération tactile prédéfinie.

8. Procédé selon la revendication 1, comprenant en outre :
l'obtention d'une instruction de restauration pour annuler l'affichage à écran divisé ;
et l'annulation de la zone d'application d'origine et de la nouvelle zone d'application selon l'instruction de restauration.

9. Appareil (100) destiné à réaliser un affichage à écran divisé dans un terminal, l'appareil comprenant au moins un processeur configuré pour :
lorsqu'un message de notification d'événement est reçu pendant l'exécution d'une application, déterminer si le message de notification d'événement est affiché sur une barre de notification ;
lorsque la notification d'événement est définie par l'utilisateur pour être affichée dans la barre de notification :
obtenir une instruction de visualisation pour visualiser le message de notification d'événement reçu, commander de diviser un écran du terminal en une zone d'application d'origine (2000) et une nouvelle zone d'application (1000) sur la base de l'instruction de visualisation obtenue, commander d'afficher une interface de l'application qui est exécutée dans le terminal sur la zone d'application d'origine en réduisant la taille du contenu de l'interface de l'application qui est exécutée, et commander d'afficher une interface d'une application liée au message de notification d'événement reçu sur la nouvelle zone d'application.

10. Appareil selon la revendication 9, ladite instruction de visualisation étant obtenue lorsque le message de notification d'événement est affiché sur une barre de notification ou dans une plage de temps prédéfinie après la réception du message de notification d'événement.

11. Appareil selon la revendication 9, ledit au moins un processeur étant configuré pour commander de réaliser une division lorsque le terminal est dans un état propice à la réalisation d'une division d'écran et, lorsque le terminal n'est pas dans un état propice à la réalisation une division d'écran, affichant l'interface de l'application liée au message de notification d'événement reçu sur l'écran du terminal.

12. Appareil selon la revendication 11, ledit état propice à la réalisation d'une division d'écran étant un état dans lequel le terminal est dans un état d'affichage à écran entier, et l'état non propice à la réalisation d'une division d'écran étant un état dans lequel le terminal est dans un état d'affichage à écran divisé.

13. Appareil selon la revendication 9, ledit au moins un processeur étant configuré pour commander de déterminer une taille de division de la nouvelle zone d'application selon une taille du message de notification d'événement reçu ou une taille d'un composant graphique d'affichage de l'application liée au message de notification d'événement reçu.

14. Appareil selon la revendication 9, ledit au moins un processeur étant configuré pour commander de détecter un emplacement du terminal détenu par un utilisateur et déterminer un emplacement de division de la nouvelle zone d'application sur la base de l'emplacement détecté.

15. Appareil selon la revendication 9, ladite instruction de visualisation comprenant une opération tactile prédéfinie sur l'écran du terminal, ledit au moins un processeur étant configuré pour commander de déterminer un emplacement de division et une taille de division de la nouvelle zone d'application selon une trace de l'opération tactile prédéfinie.
